# EUROPEAN PATENT APPLICATION

(11) **EP 4 036 886 A2**
(43) Date of publication of application: **03.08.2022**
(21) Application number: 22164180.6
(22) Date of filing: 24.03.2022
(51) Int. Cl.: G08G 1/017, G08G 1/054, G08G 1/00, G08G 1/01

(54) **METHOD AND APPARATUS FOR MONITORING VEHICLE, CLOUD CONTROL PLATFORM AND SYSTEM FOR VEHICLE-ROAD COLLABORATION**

(30) Priority: 17.06.2021 CN 202110671388
(71) Applicant: Apollo Intelligent Connectivity (Beijing) Technology Co., Ltd., Beijing 100176 (CN)
(72) Inventor: Zhao, Jianxiong, Beijing (CN); Huang, Xiulin, Beijing (CN); Lei, Chenming, Beijing (CN); Feng, Luan, Beijing (CN); Li, Xiao, Beijing (CN); Ma, Yukun, Beijing (CN); Wang, Ze, Beijing (CN); Li, Geng, Beijing (CN)
(74) Representative: Nederlandsch Octrooibureau

(57) **Abstract**

The present disclosure provides a method and apparatus for monitoring a vehicle, a cloud control platform, and a system for vehicle-road collaboration, and relates to the field of the Internet of things and intelligent transport. A specific implementation scheme includes: acquiring real-time driving data of each vehicle in a preset vehicle set; matching, in response to receiving event information of an event occurring on a driving road of a vehicle in the preset vehicle set, the event information with the real-time driving data of each vehicle in the preset vehicle set to determine a target vehicle involved in the event; and acquiring video information of the target vehicle during occurrence of the event based on the event information. The present implementation can realize real-time, visualized and accurate monitoring of a traffic event for a specific vehicle.

## Description

### TECHNICAL FIELD

The present disclosure relates to a technical field of computers, particularly to fields of the Internet of things and intelligent transport, and more particularly to a method and apparatus for monitoring a vehicle, a device, and a cloud control platform and a system for vehicle-road collaboration.

### BACKGROUND

With the continuous urban development, there are increasing transport vehicles (e.g., logistics and freight vehicles and muck vehicles at construction sites) on various urban roads. Compared with passenger vehicles, such vehicles are provided with characteristics, such as a large size and a heavy mass. In addition, drivers of such vehicles lack a general awareness of relevant laws and regulations. Frequent violations of regulations and illegal driving behaviors cause lots of hidden dangers to urban traffic, city appearance, and people's life and property safety.

How to effectively solve various kinds of management problems of urban road transport vehicles is a problem required to be solved.

### SUMMARY

The present disclosure provides a method for monitoring a vehicle, an apparatus for monitoring a vehicle, a device, and a storage medium.

According to a first aspect, a method for monitoring a vehicle is provided, including: acquiring real-time driving data of each vehicle in a preset vehicle set; matching, in response to receiving event information of an event occurring on a driving road of a vehicle in the preset vehicle set, the event information with the real-time driving data of each vehicle in the preset vehicle set to determine a target vehicle involved in the event; and acquiring video information of the target vehicle during occurrence of the event based on the event information.

According to a second aspect, an apparatus for monitoring a vehicle is provided, including: a data acquiring unit configured to acquire real-time driving data of each vehicle in a preset vehicle set; a vehicle determining unit configured to match, in response to receiving event information of an event occurring on a driving road of a vehicle in the preset vehicle set, the event information with the real-time driving data of each vehicle in the preset vehicle set to determine a target vehicle involved in the event; and a video determining unit configured to acquire video information of the target vehicle during occurrence of the event based on the event information.

According to a third aspect, an electronic device is provided, including: at least one processor; and a memory communicatively connected to the at least one processor; where the memory stores instructions executable by the at least one processor, and the instructions are executed by the at least one processor, such that the at least one processor can execute the method according to the first aspect.

According to a fourth aspect, a non-transitory computer-readable storage medium storing computer instructions is provided, where the computer instructions are used for causing a computer to execute the method according to the first aspect.

According to a fifth aspect, a computer program product is provided, including a computer program, where the computer program, when executed by a processor, implements the method according to the first aspect.

According to a sixth aspect, a cloud control platform is provided, including the electronic device according to the third aspect.

According to a seventh aspect, a system for vehicle-road collaboration is provided, including the cloud control platform and the roadside computing device according to the sixth aspect.

By the technology according to the present disclosure, it is possible to realize real-time, visualized and accurate monitoring of a traffic event for a specific vehicle.

It should be understood that contents described in the SUMMARY are neither intended to identify key or important features of embodiments of the present disclosure, nor intended to limit the scope of the present disclosure. Other features of the present disclosure will become readily understood in conjunction with the following description.

### BRIEF DESCRIPTION OF THE DRAWINGS

The accompanying drawings are used for better understanding of the present solution, and do not impose any limitation on the present disclosure. In the figures:
Fig. 1 is a diagram of an exemplary system architecture in which an embodiment of the present disclosure may be implemented;
Fig. 2 is a flowchart of a method for monitoring a vehicle according to an embodiment of the present disclosure;
Fig. 3 is a schematic diagram of an application scenario of the method for monitoring a vehicle according to the present disclosure;
Fig. 4 is a flowchart of the method for monitoring a vehicle according to another embodiment of the present disclosure;
Fig. 5 is a schematic structural diagram of an apparatus for monitoring a vehicle according to an embodiment of the present disclosure; and
Fig. 6 is a block diagram of an electronic device configured to implement the method for monitoring a vehicle of embodiments of the present disclosure.

### DETAILED DESCRIPTION OF EMBODIMENTS

Example embodiments of the present disclosure are described below with reference to the accompanying drawings, including various details of the embodiments of the present disclosure to contribute to understanding, which should be considered merely as examples. Therefore, those of ordinary skills in the art should realize that various alterations and modifications can be made to the embodiments described here without departing from the scope and spirit of the present disclosure. Similarly, for clearness and conciseness, descriptions of well-known functions and structures are omitted in the following description.

It should be noted that some embodiments in the present disclosure and some features in the embodiments may be combined with each other on a non-conflict basis. The present disclosure will be described in detail below with reference to the accompanying drawings and in combination with the embodiments.

In a technology of vehicle to everything (V2X), a global positioning system (GPS) navigation technology, a vehicle-to-vehicle communication technology, and a wireless communication and remote sensing technology are integrated to provide a foundation for a novel development direction of an automotive technology. In the technology of V2X, road information may be acquired using a roadside sensing technology, thereby providing necessary information for solutions, such as intelligent transport and autonomous driving. In some applications, required road information may be acquired by a roadside sensing device arranged near a road. For example, the road information may be acquired by roadside sensing devices arranged on both sides of a straight road or at an intersection.

In a system architecture of vehicle-road collaboration of intelligent transport, a roadside device may include a roadside sensing device and a roadside computing device. The roadside sensing device (e.g., a roadside camera) is connected to the roadside computing device (e.g., a roadside computing unit (RSCU)), and the roadside computing device is connected to a cloud control platform. In another system architecture, the roadside sensing device itself includes a computing function, i.e., the roadside device may be a roadside sensing device having a computing function, and the roadside sensing device may be directly connected to the cloud control platform. The above connection may be a wired connection or a wireless connection. The cloud control platform may also be referred to as a vehicle-road collaboration management platform, a central system, an edge computing platform, a cloud computing platform, a cloud server, and the like. The cloud control platform performs processing in cloud, and an electronic device included in the cloud control platform may acquire data, e.g., a picture and a video, from a sensing device (e.g., the roadside camera), thereby performing image and video processing and data computing.

The roadside sensing technology is a technology that sends an obstacle sensed by a roadside sensor and a sensing algorithm to a vehicle, thereby assisting the vehicle to achieve autonomous driving functions. At present, the roadside sensing sensor includes a camera, a lidar, and the like. The camera may collect a video of a passing vehicle.

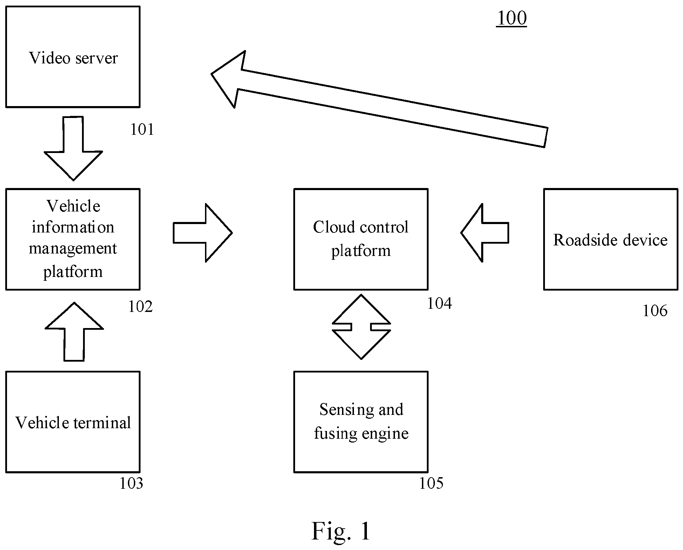

Fig. 1 shows an exemplary system architecture 100 in which a method or an apparatus for monitoring a vehicle in embodiments of the present disclosure may be implemented.

As shown in Fig. 1, the system architecture 100 may include a video server 101, a vehicle information management platform 102, a vehicle terminal 103, a cloud control platform 104, a sensing and fusing engine 105, and a roadside device 106. Communications among the devices are performed through a network, which may include a wired network and a wireless network.

The video server 101 is configured to store information such as videos collected by the roadside device 106. Other electronic devices acquire a video stream of the vehicle by accessing the video server 101.

The vehicle information management platform 102 is configured for managing vehicle information, and may supervise a focused vehicle, such as a commercial vehicle (which is a vehicle for transporting passengers and goods in terms of design and technical features). In this case, the vehicle information management platform may be a commercial-vehicle management platform. The vehicle information management platform 102 may store information such as license plate numbers and driving permits of commercial vehicles.

The vehicle terminal 103 may be configured to collect vehicle information, e.g., real-time driving data. The real-time driving data may include, e.g., a location, a time, a speed, and an acceleration. The vehicle terminal 103 may upload the collected information to the vehicle information management platform 102.

The cloud control platform 104 may acquire vehicle-related information from the vehicle information management platform 102, and may acquire event information from the roadside device 106. The sensing and fusing engine 105 is configured for matching and fusing the vehicle-related information and the event information to determine a vehicle involved in an event.

The sensing and fusing engine 105 may acquire the vehicle-related information and the event information, and match and fuse the vehicle-related information and the event information, to determine the vehicle involved in the event.

The roadside device 106 may include a roadside sensing device and a roadside computing device, and may determine whether a preset event occurs based on collected videos of vehicles. The preset event may include: red light running, an accident, an abnormal standstill, overspeeding, converse running, and dropping and scattering. The roadside device 106 may upload the collected videos to the video server 101. A part of the preset events may also be referred to as violation events, such as red light running, overspeeding, and converse running.

The cloud control platform 104, the vehicle information management platform 102, and the sensing and fusing engine 105 may all be separately configured, or may be configured in any combination. For example, the vehicle information management platform 102 may be integrated within the cloud control platform 104, or the sensing and fusing engine 105 may be integrated within the cloud control platform, or both the vehicle information management platform 102 and the sensing and fusing engine 105 may be integrated within the cloud control platform.

It should be noted that the method for monitoring a vehicle provided in embodiments of the present disclosure is generally executed by the sensing and fusing engine 105. Accordingly, the apparatus for monitoring a vehicle is generally provided in the sensing and fusing engine 105.

It should be understood that the numbers of terminal devices, networks, and servers in Fig. 1 are merely illustrative. Any number of terminal devices, networks, and servers may be provided based on actual requirements.

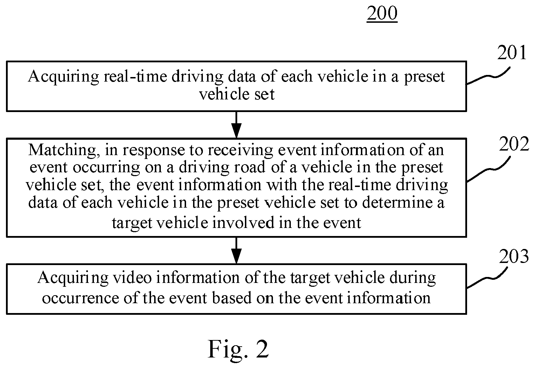

Further referring to Fig. 2, a process 200 of a method for monitoring a vehicle according to an embodiment of the present disclosure is shown. The method for monitoring a vehicle of the present embodiment includes the following steps.

Step 201: acquiring real-time driving data of each vehicle in a preset vehicle set.

In the present embodiment, an executing body of the method for monitoring a vehicle may acquire the real-time driving data of each vehicle from an electronic device (for example, the vehicle information management platform 102) configured to store information of the vehicles in the preset vehicle set. The preset vehicle set may include multiple vehicles, each of which may be pre-registered in a relevant department, and may be a commercial vehicle or a vehicle configured to transport dangerous goods. The real-time driving data may include GPS data, e.g., information related to a traveling state, such as a location, a time, a heading angle, and a speed, and may also include information related to a driving environment, such as road surface conditions and weather conditions. In some specific practices, the vehicle may be a vehicle that gets in and out of a construction site and is configured to transport building materials.

Step 202: matching, in response to receiving event information of an event occurring on a driving road of a vehicle in the preset vehicle set, the event information with the real-time driving data of the vehicles to determine a target vehicle involved in the event.

In the present embodiment, the executing body may further receive event information of an event occurring on a driving road of a vehicle in the preset vehicle set. An event may include, but is not limited to: red light running, an accident, an abnormal standstill, overspeeding, converse running, and dropping and scattering. The event information may include, but is not limited to: an occurrence location, an occurrence time, a degree level, and the like of the event. The determination of the event may be implemented by a roadside device (e.g., the roadside device 106 shown in Fig. 1) . Specifically, the roadside device may analyze and process collected videos using an existing visual perception algorithm, to determine whether a preset event occurs. Those skilled in the art may preset a template for an event, and if a parameter or several parameters meet requirements in the template, it is determined that the event has occurred. For example, for an overspeeding event, the roadside device may determine a speed of the vehicle via a roadside sensing device. If the speed is greater than a maximum speed value of the driving road, the overspeeding event is considered to have a high occurrence probability. Then, the roadside device may further determine whether the overspeeding event occurs based on speed information collected by a vehicle terminal.

After determining that the event has occurred, the roadside device may determine the event information and upload the event information. After receiving the event information, the executing body may match the event information with the acquired real-time driving data of the vehicles to determine a target vehicle involved in the event. Specifically, the executing body may compare a location and a time in the real-time driving data with the occurrence location and the occurrence time of the event in the event information, and may determine, if the location and the time in the real-time driving data match the occurrence location and the occurrence time of the event in the event information, the target vehicle involved in the event based on a matching result.

Step 203: acquiring video information of the target vehicle during occurrence of the event based on the event information.

After determining the target vehicle, the executing body may further acquire the video information of the target vehicle during occurrence of the event based on the event information. Specifically, the executing body may determine an identifier of the roadside sensing device at the occurrence location of the event based on the occurrence location of the event in the event information. Then the executing body may acquire the video information of the target vehicle during occurrence of the event from the electronic device (e.g., the video server shown in Fig. 1) configured to store videos collected by the roadside sensing device.

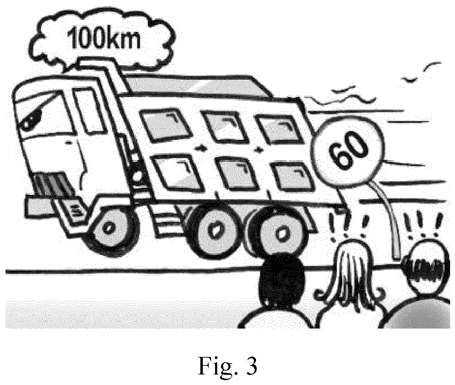

Further referring to Fig. 3, a schematic diagram of an application scenario of the method for monitoring a vehicle according to the present disclosure is shown. In the application scenario of Fig. 3, a vehicle terminal on a freight vehicle collects driving data of the vehicle in real time, and uploads the real-time driving data to a vehicle information management platform. When sensing an overspeeding event of the freight vehicle, a roadside device on a driving road of the freight vehicle uploads time information of the overspeeding event to a cloud control platform. The cloud control platform acquires the real-time driving data of the freight vehicle from the vehicle information management platform, determines an overspeeding vehicle via a sensing and fusing engine by matching, and determines video information of the vehicle that is overspeeding, thereby achieving monitoring of the vehicle.

By the method for monitoring a vehicle provided in the above embodiments of the present disclosure, it is possible to perform event monitoring on a specific vehicle, thereby improving the driving safety of the vehicle.

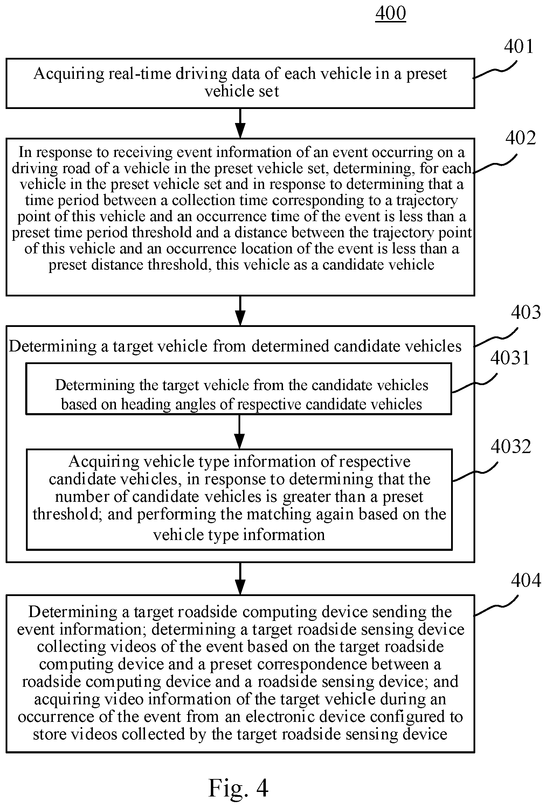

Further referring to Fig. 4, a process 400 of the method for monitoring a vehicle according to another embodiment of the present disclosure is shown. As show in Fig. 4, the method of the present embodiment may include the following steps.

Step 401: acquiring real-time driving data of each vehicle in a preset vehicle set.

Step 402: in response to receiving event information of an event occurring on a driving road of a vehicle in the preset vehicle set, determining, for each vehicle in the preset vehicle set and in response to determining that a time period between a collection time corresponding to a trajectory point of this vehicle and an occurrence time of the event is less than a preset time period threshold and a distance between the trajectory point of this vehicle and an occurrence location of the event is less than a preset distance threshold, this vehicle as a candidate vehicle.

In the present embodiment, when receiving the event information of the event occurring on a driving road of a vehicle, the executing body may further analyze real-time driving data of each vehicle. The event information includes the occurrence location and the occurrence time of the event. The real-time driving data of each vehicle may include trajectory points and respectively corresponding collection times of the vehicle. For each vehicle, the executing body may first compare the collection time corresponding to each trajectory point of the vehicle with the occurrence time of the event; if the time period between the collection time corresponding to a trajectory point of the vehicle and the occurrence time of the event is less than the preset time period threshold, the executing body may further compare each trajectory point of the vehicle with the occurrence location of the event; if the distance between a trajectory point of the vehicle and the occurrence location of the event is less than the preset distance threshold, the executing body may determine the vehicle as the candidate vehicle. Here, the comparison is made first from a time dimension, which may be regarded as preliminary screening, and in case of mismatching, matching may be performed on information of another vehicle directly.

Step 403: determining a target vehicle from determined candidate vehicles.

After determining the candidate vehicles, the executing body may further determine the target vehicle from the candidate vehicles. Specifically, if the number of candidate vehicles is 1, the candidate vehicle may be directly determined as the target vehicle. If the number of candidate vehicles is 2 or more, real-time driving data of each candidate vehicle may be processed, and matching may be performed again based on the processed real-time driving data.

In some optional implementations of the present embodiment, if the number of candidate vehicles is 2 or more, the executing body may further perform matching in step 4031.

Step 4031: determining the target vehicle from the candidate vehicles based on heading angles of respective candidate vehicles.

In the present implementation, the executing body may determine traveling directions of respective candidate vehicles based on the heading angles, thereby determining a vehicle involved in the event (for example, retrograding or red light running).

In some optional implementations of the present embodiment, if the number of obtained candidate vehicles by matching of the heading angles is still 2 or more, the executing body may further process the real-time driving data of the candidate vehicles in step 4032.

Step 4032: acquiring vehicle type information of respective candidate vehicles, in response to determining that the number of candidate vehicles is greater than a preset threshold; and performing the matching again based on the vehicle type information.

In the present implementation, the executing body may further acquire the vehicle type information of the respective candidate vehicles. The vehicle type information of a vehicle may include information such as a size and an outline of the vehicle. The executing body may acquire the vehicle type information from a roadside device and from a vehicle information management platform respectively, then compare the vehicle type information acquired by the roadside device and the vehicle type information acquired from the vehicle information management platform to determine whether the vehicle type information acquired by the above two manners are matched, and determine, in case of matching, a candidate vehicle with a matched vehicle type information as the target vehicle. In case of mismatching for the candidate vehicles, the executing body may directly output the candidate vehicles for further manual confirmation.

Step 404: determining a target roadside computing device sending the event information; determining a target roadside sensing device collecting videos of the event based on the target roadside computing device and a preset correspondence between a roadside computing device and a roadside sensing device; and acquiring video information of the target vehicle during an occurrence of the event from an electronic device configured to store videos collected by the target roadside sensing device.

In the present embodiment, the event information is sent after a roadside computing device (RSCU) analyzes and determines video information collected by a roadside sensing device. When receiving the event information, the executing body may determine the target roadside computing device sending the event information, i.e., recording an identifier of the target roadside computing device, then acquire the preset correspondence between roadside computing devices and roadside sensing devices, and search for the identifier of the target roadside computing device using the correspondence, to determine the target roadside sensing device collecting the videos of the event. Then, the executing body may acquire the video information of the target vehicle during the occurrence of the event from the electronic device configured to store the videos collected by the target roadside sensing device.

By the method for monitoring a vehicle provided in the above embodiments of the present disclosure includes, GSP data of the vehicle is combined with sensing data obtained by a roadside device of intelligent transport, and a driving event recognized by the roadside device is linked to the vehicle by trajectory fitting, thereby matching an entire chain of the vehicle involved, the driver involved, and the enterprise involved based on the vehicle information that has been inputted into the platform to achieve the traceability and automatic supervision. It is possible to play a role in matching since there is no need to recognize a license plate, in a case of a roadside sensing device not capable of recognizing the license plate, or a failure in recognition due to illumination, shielding and the like, or the vehicle involved using a fake license plate.

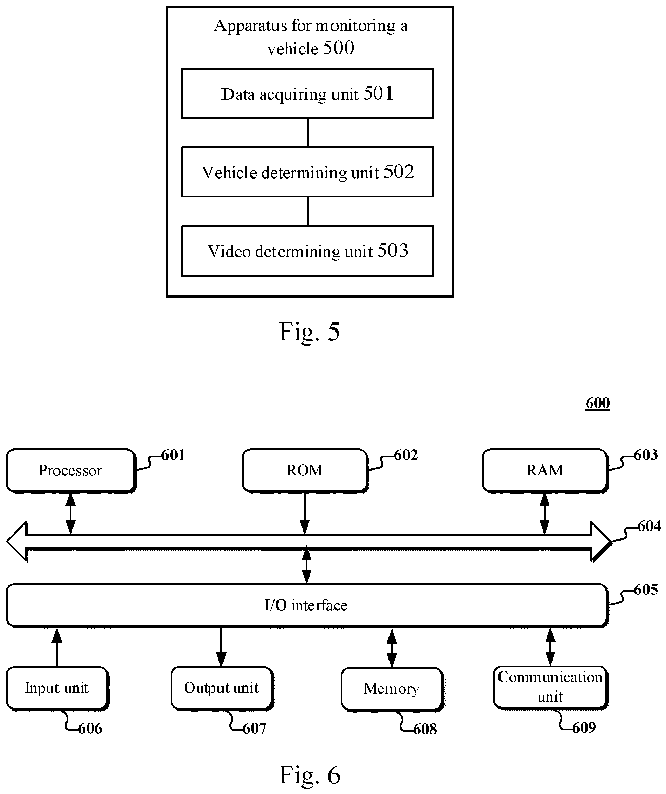

Further referring to Fig. 5, as an implementation of the method shown in the above figures, an embodiment of the present disclosure provides an apparatus for monitoring a vehicle. The embodiment of the apparatus corresponds to the embodiment of the method shown in Fig. 2, and the apparatus may be specifically applied to various electronic devices.

As shown in Fig. 5, the apparatus 500 for monitoring a vehicle according to the present embodiment includes: a data acquiring unit 501, a vehicle determining unit 502, and a video determining unit 503.

The data acquiring unit 501 is configured to acquire real-time driving data of each vehicle in a preset vehicle set.

The vehicle determining unit 502 is configured to match, in response to receiving event information of an event occurring on a driving road of a vehicle in the preset vehicle set, the event information with the real-time driving data of each vehicle in the preset vehicle set to determine a target vehicle involved in the event.

The video determining unit 503 is configured to acquire video information of the target vehicle during occurrence of the event based on the event information.

In some optional implementations of the present embodiment, the real-time driving data includes trajectory points and corresponding collection times of a vehicle, and the event information includes an occurrence location and an occurrence time of the event. The vehicle determining unit 502 may be further configured to: for each vehicle of the vehicles, determine, in response to determining that a time period between a collection time corresponding to a trajectory point of the vehicle and the occurrence time is less than a preset time period threshold and a distance between the trajectory point of the vehicle and the occurrence location of the event is less than a preset distance threshold, the vehicle as a candidate vehicle; and determine the target vehicle from determined candidate vehicles.

In some optional implementations of the present embodiment, the real-time driving data includes a heading angle. The vehicle determining unit 502 may be further configured to: determine, in response to determining that the number of candidate vehicles is greater than a preset threshold, the target vehicle from the candidate vehicles based on heading angles of respective candidate vehicles.

In some optional implementations of the present embodiment, the vehicle determining unit 502 may be further configured to: acquire vehicle type information of each candidate vehicle, in response to determining that the number of candidate vehicles is greater than the preset threshold; and perform the matching again based on the vehicle type information.

In some optional implementations of the present embodiment, the event information is sent by a roadside computing device after the roadside computing device analyzes and determines video information collected by a roadside sensing device. The video determining unit 503 may be further configured to: determine a target roadside computing device sending the event information; determine a target roadside sensing device collecting videos of the event based on the target roadside computing device and a preset correspondence between a roadside computing device and a roadside sensing device; and acquire the video information of the target vehicle during the occurrence of the event from an electronic device configured to store videos collected by the target roadside sensing device.

It should be understood that the disclosed unit 501 to unit 503 in the apparatus 500 for monitoring a vehicle correspond to the steps in the method described in Fig. 2 respectively. Therefore, the operations and features described above for the method for monitoring a vehicle also apply to the apparatus 500 and the units included therein. The description will not be repeated here.

In the technical solution of the present disclosure, the acquisition, storage, and application of personal information of a user involved are in conformity with relevant laws and regulations, and does not violate public order and good customs.

According to an embodiment of the present disclosure, the present disclosure further provides an electronic device, a readable storage medium, and a computer program product.

Fig. 6 shows a block diagram of an electronic device 600 configured to implement the method for monitoring a vehicle according to embodiments of the present disclosure. The electronic device is intended to represent various forms of digital computers, such as a laptop computer, a desktop computer, a workbench, a personal digital assistant, a server, a blade server, a mainframe computer, and other suitable computers. The electronic device may also represent various forms of mobile apparatuses, such as a personal digital assistant, a cellular phone, a smart phone, a wearable device, and other similar computing apparatuses. The components shown herein, the connections and relationships thereof, and the functions thereof are used as examples only, and are not intended to limit implementations of the present disclosure described and/or claimed herein.

As shown in Fig. 6, the electronic device 600 includes a processor 601, which may execute various appropriate actions and processes in accordance with a computer program stored in a read only memory (ROM) 602 or a computer program loaded into a random access memory (RAM) 603 from a memory 608. The RAM 603 may further store various programs and data required by operations of the electronic device 600. The processor 601, the ROM 602, and the RAM 603 are connected to each other through a bus 604. An input/output (I/O) interface 605 is also connected to the bus 604.

A plurality of components in the electronic device 600 is connected to the I/O interface 605, including: an input unit 606, such as a keyboard and a mouse; an output unit 607, such as various types of displays and speakers; a memory 608, such as a magnetic disk and an optical disk; and a communication unit 609, such as a network card, a modem, and a wireless communication transceiver. The communication unit 609 allows the electronic device 600 to exchange information/data with other devices through a computer network such as the Internet and/or various telecommunication networks.

The processor 601 may be various general purpose and/or special purpose processing components having a processing power and a computing power. Some examples of the processor 601 include, but are not limited to, a central processing unit (CPU), a graphics processing unit (GPU), various special purpose artificial intelligence (AI) computing chips, various processors running a machine learning model algorithm, a digital signal processor (DSP), and any appropriate processor, controller, micro-controller, and the like. The processor 601 executes various methods and processes described above, such as the method for monitoring a vehicle. For example, in some embodiments, the method for monitoring a vehicle may be implemented as a computer software program that is tangibly included in a machine readable storage medium, such as the memory 608. In some embodiments, some or all of the computer programs may be loaded and/or installed onto the electronic device 600 via the ROM 602 and/or the communication unit 609. When the computer program is loaded into the RAM 603 and executed by the processor 601, one or more steps of the method for monitoring a vehicle described above may be executed. Alternatively, in other embodiments, the processor 601 may be configured to execute the method for monitoring a vehicle by any other appropriate approach (e.g., by means of firmware).

The cloud control platform provide in the present disclosure may include the electronic device shown in Fig. 6.

In an embodiment, a system for vehicle-road collaboration provided in the present disclosure may include the cloud control platform (e.g., the cloud control platform 104 shown in Fig. 1) and a roadside computing device.

In another embodiment, a system for vehicle-road collaboration provided in the present disclosure may further include a roadside sensing device.

Various implementations of the systems and technologies described above herein may be implemented in a digital electronic circuit system, an integrated circuit system, a field programmable gate array (FPGA), an application specific integrated circuit (ASIC), an application specific standard product (ASSP), a system on a chip (SOC), a complex programmable logic device (CPLD), computer hardware, firmware, software, and/or a combination thereof. The various implementations may include: an implementation in one or more computer programs that are executable and/or interpretable on a programmable system including at least one programmable processor, which may be a special purpose or general purpose programmable processor, and may receive data and instructions from, and transmit data and instructions to, a storage system, at least one input apparatus, and at least one output apparatus.

Program codes for implementing the method of the present disclosure may be compiled using any combination of one or more programming languages. The above program codes may be packaged into a computer program product. The program codes or the computer program product may be provided to a processor or controller of a general purpose computer, a special purpose computer, or other programmable apparatuses for data processing, such that the program codes, when executed by the processor 601, cause the functions/operations specified in the flowcharts and/or block diagrams to be implemented. The program codes may be completely executed on a machine, partially executed on a machine, executed as a separate software package on a machine and partially executed on a remote machine, or completely executed on a remote machine or server.

In the context of the present disclosure, the machine readable storage medium may be a tangible medium which may contain or store a program for use by, or used in combination with, an instruction execution system, apparatus or device. The machine readable storage medium may be a machine readable signal storage medium or a machine readable storage medium. The computer readable storage medium may include, but is not limited to, electronic, magnetic, optical, electromagnetic, infrared, or semiconductor systems, apparatuses, or devices, or any appropriate combination of the above. A more specific example of the machine readable storage medium will include an electrical connection based on one or more pieces of wire, a portable computer disk, a hard disk, a random access memory (RAM), a read only memory (ROM), an erasable programmable read only memory (EPROM or flash memory), an optical fiber, a portable compact disk read only memory (CD-ROM), an optical memory device, a magnetic memory device, or any appropriate combination of the above.

To provide interaction with a user, the systems and technologies described herein may be implemented on a computer that is provided with: a display apparatus (e.g., a CRT (cathode ray tube) or a LCD (liquid crystal display) monitor) configured to display information to the user; and a keyboard and a pointing apparatus (e.g., a mouse or a trackball) by which the user can provide an input to the computer. Other kinds of apparatuses may also be configured to provide interaction with the user. For example, feedback provided to the user may be any form of sensory feedback (e.g., visual feedback, auditory feedback, or haptic feedback); and an input may be received from the user in any form (including an acoustic input, a voice input, or a tactile input).

The systems and technologies described herein may be implemented in a computing system that includes a back-end component (e.g., as a data server), or a computing system that includes a middleware component (e.g., an application server), or a computing system that includes a front-end component (e.g., a user computer with a graphical user interface or a web browser through which the user can interact with an implementation of the systems and technologies described herein), or a computing system that includes any combination of such a back-end component, such a middleware component, or such a front-end component. The components of the system may be interconnected by digital data communication (e.g., a communication network) in any form or medium. Examples of the communication network include: a local area network (LAN), a wide area network (WAN), and the Internet.

The computer system may include a client and a server. The client and the server are generally remote from each other, and usually interact through a communication network. The relationship of the client and the server arises by virtue of computer programs that run on corresponding computers and have a client-server relationship with each other. The server may be a cloud server, is also known as a cloud computing server or a cloud host, and is a host product in a cloud computing service system to solve the defects of difficult management and weak service extendibility existing in conventional physical hosts and VPS services (virtual private server, or VPS for short). The server may be a distributed system server, or a server combined with a blockchain.

It should be understood that the various forms of processes shown above may be used to reorder, add, or delete steps. For example, the steps disclosed in the present disclosure may be executed in parallel, sequentially, or in different orders, as long as the desired results of the technical solutions of the present disclosure can be implemented. This is not limited herein.

The above specific implementations do not constitute any limitation to the scope of protection of the present disclosure. It should be understood by those skilled in the art that various modifications, combinations, sub-combinations, and replacements may be made according to the design requirements and other factors. Any modification, equivalent replacement, improvement, and the like made within the spirit and principle of the present disclosure should be encompassed within the scope of protection of the present disclosure.

## Claims

1. A method for monitoring a vehicle, comprising:
acquiring (201) real-time driving data of each vehicle in a preset vehicle set;
matching (202), in response to receiving event information of an event occurring on a driving road of a vehicle in the preset vehicle set, the event information with the real-time driving data of each vehicle in the preset vehicle set to determine a target vehicle involved in the event; and
acquiring (203) video information of the target vehicle during occurrence of the event based on the event information.

2. The method according to claim 1, wherein the real-time driving data comprises trajectory points and corresponding collection times of a vehicle, and the event information comprises an occurrence location and an occurrence time of the event; and
matching the event information with the real-time driving data of each vehicle in the preset vehicle set to determine a target vehicle involved in the event comprises:
for each vehicle in the preset vehicle set, determining (402), in response to determining that a time period between a collection time corresponding to a trajectory point of the vehicle and the occurrence time is less than a preset time period threshold and a distance between the trajectory point of the vehicle and the occurrence location of the event is less than a preset distance threshold, the vehicle as a candidate vehicle; and
determining the target vehicle from determined candidate vehicles.

3. The method according to claim 2, wherein the real-time driving data comprises a heading angle; and
determining the target vehicle from the determined candidate vehicles comprises:
determining (4031), in response to determining that the number of candidate vehicles is greater than a preset threshold, the target vehicle from the candidate vehicles based on heading angles of respective candidate vehicles.

4. The method according to claim 2, wherein determining the target vehicle from the determined candidate vehicles comprises:
acquiring vehicle type information of each candidate vehicle, in response to determining that the number of candidate vehicles is greater than the preset threshold; and
performing the matching again based on the vehicle type information.

5. The method according to any one of claims 1 to 4, wherein the event information is sent by a roadside computing device after the roadside computing device analyzes and determines video information collected by a roadside sensing device; and
acquiring the video information of the target vehicle during occurrence of the event based on the event information comprises:
determining a target roadside computing device sending the event information;
determining a target roadside sensing device collecting videos of the event based on the target roadside computing device and a preset correspondence between a roadside computing device and a roadside sensing device; and
acquiring the video information of the target vehicle during the occurrence of the event from an electronic device configured to store videos collected by the target roadside sensing device.

6. An apparatus for monitoring a vehicle, comprising:
a data acquiring unit (501) configured to acquire real-time driving data of each vehicle in a preset vehicle set;
a vehicle determining unit (502) configured to match, in response to receiving event information of an event occurring on a driving road of a vehicle in the preset vehicle set, the event information with the real-time driving data of each vehicle in the preset vehicle set to determine a target vehicle involved in the event; and
a video determining unit (503) configured to acquire video information of the target vehicle during occurrence of the event based on the event information.

7. The apparatus according to claim 6, wherein the real-time driving data comprises trajectory points and corresponding collection times of a vehicle, and the event information comprises an occurrence location and an occurrence time of the event; and
the vehicle determining unit is further configured to:
for each vehicle in the preset vehicle set, determine, in response to determining that a time period between a collection time corresponding to a trajectory point of the vehicle and the occurrence time is less than a preset time period threshold and a distance between the trajectory point of the vehicle and the occurrence location of the event is less than a preset distance threshold, the vehicle as a candidate vehicle; and
determine the target vehicle from determined candidate vehicles.

8. The apparatus according to claim 6, wherein the real-time driving data comprises a heading angle; and
the vehicle determining unit is further configured to:
determine, in response to determining that the number of candidate vehicles is greater than a preset threshold, the target vehicle from the candidate vehicles based on heading angles of respective candidate vehicles.

9. The apparatus according to claim 6, wherein the vehicle determining unit is further configured to:
acquire vehicle type information of each candidate vehicle, in response to determining that the number of candidate vehicles is greater than the preset threshold; and
perform the matching again based on the vehicle type information.

10. The apparatus according to any one of claims 6 to 9, wherein the event information is sent by a roadside computing device after the roadside computing device analyzes and determines video information collected by a roadside sensing device; and
the video determining unit is further configured to:
determine a target roadside computing device sending the event information;
determine a target roadside sensing device collecting videos of the event based on the target roadside computing device and a preset correspondence between a roadside computing device and a roadside sensing device; and
acquire the video information of the target vehicle during the occurrence of the event from an electronic device configured to store videos collected by the target roadside sensing device.

11. An electronic device, comprising:
at least one processor; and
a memory communicatively connected to the at least one processor; wherein
the memory stores instructions executable by the at least one processor, and the instructions are executed by the at least one processor, such that the at least one processor can execute the method according to any one of claims 1 to 5.

12. A non-transitory computer readable storage medium storing computer instructions, the computer instructions being used for causing a computer to execute the method according to any one of claims 1 to 5.

13. A computer program product, comprising a computer program, wherein the computer program, when executed by a processor, implements the method according to any one of claims 1 to 5.

14. A cloud control platform, comprising the electronic device according to claim 11.

15. A system for vehicle-road collaboration, comprising the cloud control platform according to claim 14 and a roadside computing device.

16. The system for vehicle-road collaboration according to claim 15, wherein the system further comprises a roadside sensing device according to claim 14.
